# EUROPEAN PATENT SPECIFICATION

(11) **EP 0 701 706 B1**
(45) Date of publication and mention of the grant of the patent: **12.08.1998**
(21) Application number: 92923472.2
(22) Date of filing: 23.10.1992
(51) Int. Cl.: G02B 21/22

(54) **OPTICAL STEREOSCOPIC MICROSCOPE SYSTEM**
OPTISCHES STEREOSKOPISCHES MIKROSKOPSYSTEM
SYSTEME DE MICROSCOPE STEREOSCOPIQUE OPTIQUE

(43) Date of publication of application: 20.03.1996
(73) Proprietor: GRINBLAT, Avi, New York, NY 10023 (US)
(72) Inventor: GRINBLAT, Avi, New York, NY 10023 (US)
(74) Representative: Newby, Martin John
(86) International application number: US9209226
(87) International publication number: WO9410596

(56) References cited:
- US-A- 1 716 321
- US-A- 2 660 090
- US-A- 4 157 859
- US-A- 4 710 000
- US-A- 4 763 968
- US-A- 5 438 456

## Description

### Field of the Invention

The present invention relates to optical microscope systems and more particularly to optical bright-field stereoscopic microscope systems used in connection with microsurgery medical procedures.

### Background of the Invention

At the present time, optical, bright-field, stereoscopic microscopes are used in connection with medical surgical procedures, for example in the microsurgery of the eye. Such microscopes have two eyepieces so that the viewer may view the object to be magnified using both his eyes at the same time. The viewer sees two side-by-side, magnified images of the object and produces a three-dimensional ("3D") image in his mind.

In the conventional stereoscopic microscope the individual images, and the resulting 3-D image, are not inverted. The viewer sees an image which is, in effect, in the same position as the object.

However, in some surgical procedures, especially in inner eye surgery or "vitrectomy surgery" for the back area of the retina, an additional magnifying lens system is positioned between the stereoscopic microscope and the object, i.e. the eye being operated upon. That additional lens system may invert the image so that the surgeon sees a mirror image. This presents a difficult problem for the surgeon in eye-hand coordination. Also, such inverted images may be presented in certain digital diagnostic systems.

German Gebrauchsmuster G3902035.9 of May 11, 1989, discloses a stereoscopic optical microscope in which the two images are inverted by complex mirror and prism arrangements. Each of the images is reflected from a prism to a first mirror, then to a second mirror and then to another prism. Each time the image moves through an air gap, from the prism to the mirror or from one mirror to another, it necessarily loses at least 6% in light, and therefore in clarity. Consequently, each image is degraded at least 18% by the inversion prism-mirror system of the German Gebrauchsmuster.

**DE 3 507 458** discloses a stereo microscope having a double prism acting as an image reverser. The double prism is followed by two 90-degree prisms.

**US 4 710 000** discloses a stereo microscope for eye surgery having two reversing prisms with adjustable interocular distance. The image is inverted and left-right reversed. It uses a 90-degree reflection prism with a roof-surface.

**US 4 728 183** discloses an ophthalmic lens system, including a contact lens and an aspheric entry lens. That lens system may be used with an ophthalmic microscope.

**"Design Of Fire Control Optics", ORDM 2-1, page 295**, shows Abbe's Modification of the Porro Prism System, in which a left prism and a right prism, of different shapes, are cemented together to invert and revert (left-right reverse) an image.

### Summary of the Invention

In accordance with the present invention, there is presented an improved optical stereoscopic microscope system. The system utilizes a conventional stereoscopic microscope which preferably has lenses for direct viewing by a viewer as well as auxiliary lens systems for stereo photography, stereo camcorder or video cameras.

An additional lens system is used directly above the object to be viewed, for example, near to the eye which is undergoing surgery. That additional lens system presents a wide and magnified image, which is especially useful in eye surgery. The additional lens system is an aspherical optical lens system and a contact conformer lens. The aspherical lens system produces an inverted image of the object being viewed. That image is again inverted to present a non-inverted image to the viewer, by two prism systems, one for each eyepiece of the stereoscopic microscope. The prisms are of a special design called "Abbe's Modification of the Porro Prism System" in which the image is internally inverted, by the prisms, without air gaps and without mirrors. The image is not degraded by the internal prism inversion as it does not pass through a prism-mirror or mirror-mirror air gap.

The prism system consists of two pairs of each of two prisms for a total of four prisms which are cemented together.

### Objectives and Features of the Invention

It is an objective of the present invention to provide an optical stereoscopic microscope system, especially adapted for eye microsurgery, in which the user sees the objects without inversion of the image.

It is a further objective of the present invention to provide such a microscope system in which the inversion is accomplished without appreciable loss of light, i.e. without appreciably degrading the image and the inversion device is relatively simple, low in cost and available for ready removal from the optical paths of the microscope.

The present invention provides a stereoscopic microscope system according to claim 1, for example to be used by vitreous surgeons. The system includes positioning means to position the object to be viewed and an aspherical lens system adjacent the positioning means. The aspherical lens system may be constructed in two primary ways. The aspherical lens system may include a first lens having convex-concave curved faces proximate the positioning means and a second lens having convex-concave curved faces and facing the first lens. The concave faces of the first and second lenses face each other and the aspherical lens system produces an inverted image. Alternatively, the aspherical lens system may be one solid lens with two oppositely facing convex curved faces to produce an inverted image. The inverted image from the aspherical lens system may then be split into two inverted images by either an objective lens or a zoom lens of the stereomicroscope. Next, a prism system inverts the two separated and inverted images from the aspherical lens system. That prism system consists of two pairs of prisms, each pair of prisms being an Abbe's Modification of Porro Prism System. Binocular tubes and eyepiece means, which may be conventional, enlarges each of the reverted images from the prism system.

Preferably, the microscope means includes a zoom optical system and a beam splitter, and the prism system is positioned between the zoom optical system and the beam splitter.

### BRIEF DESCRIPTION OF THE DRAWINGS

Other objectives and features of the present invention will be apparent on the following detailed description taken in conjunction with the accompanying drawings.
Figure 1 is a side cross-sectional view, showing the optical stereoscopic system of the present invention;
Figure 2 is a perspective view, illustrating the inverted prism system within its enclosure;
Figures 3A and 3B are perspective views of single prisms of varying geometries;
Figure 3C is a side plan view of the prism of Figure 3A;
Figure 3D is a side plan view of one pair of the prisms of Figure 3A;
Figure 3E is a top plan view of one pair of the prisms of Figure 3A;
Figure 3F is a top view, showing the top layer of two pairs of the prisms of the inverter;
Figure 3G isa bottom view, showing the bottom layer of two pairs of the prisms of the inverter;
Figure 4A is a side cross-sectional view, showing the aspherical lens system comprised at two lenses;
Figure 4B is a side cross-sectional view showing as aspherical lens system comprised of a single solid lens;
Figure 5 is a front plan view of the optical stereoscopic system of the present invention;
Figure 6 is a side cross-sectional view showing an aspherical lens and a cornea conformer lens contained in a single housing; and
Figure 7 is a side cross-sectional view showing a plastic aspherical lens system and a cornea conformer lens in a single housing.

### DETAILED DESCRIPTION OF THE INVENTION

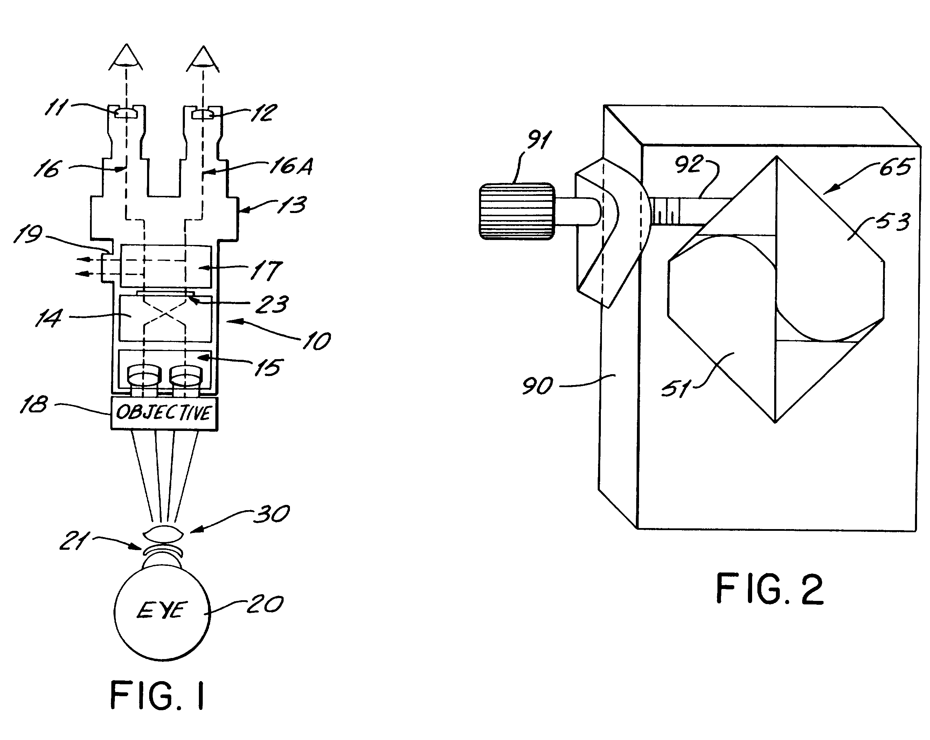

Figure 1 shows the stereo microscope system 10 of the present invention. The microscope itself may be a conventional optical stereo microscope available, for example, from Nikon, Canon or Wild-Leitz.

The system includes a left eyepiece lens 11 and a right eyepiece lens 12 within the housing 13. A zoom lens system 15, which may be conventional, is used to enlarge or reduce the images received from the objective lens system 18. The zoom lens 15 produces two image beams which eventually become the left optical image 16 and the right optical image 16A. However, the two image beams from the zoom lens 15 are first sent through an inverter 14 (inverter prism system), described in detail below, which switches (inverts) the left and right image beams. A conventional beam amplifier 17 sends these inverted image beams to the eyepieces 11 and 12, as well as to an additional optical viewing device 19, such as a video camera or assistant's eyepiece.

Except for the inverter 14 the stereo microscope is conventional.

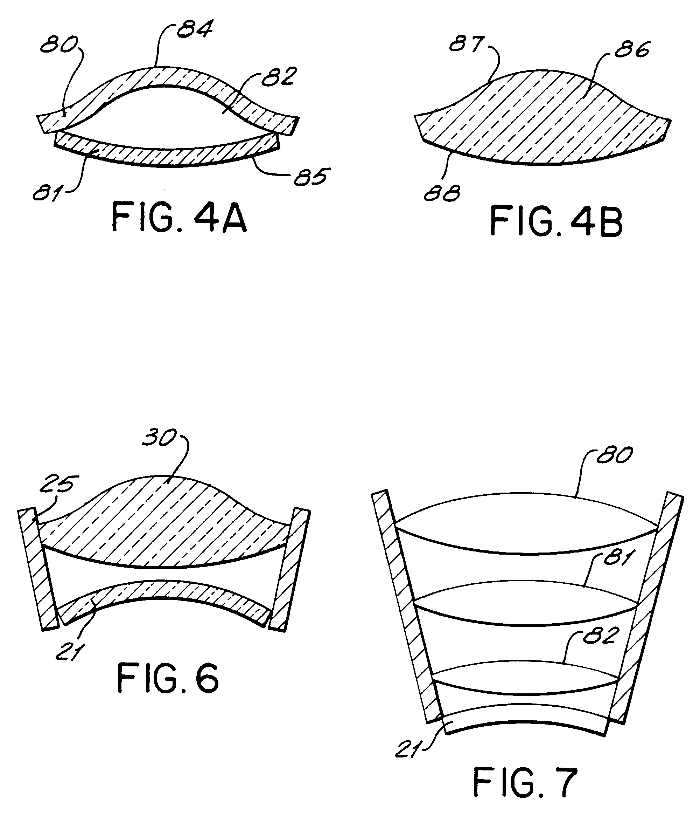

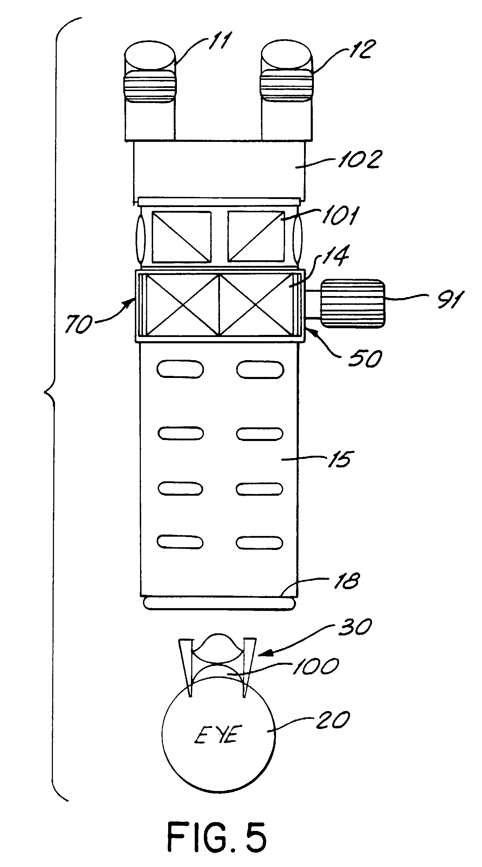

An "additional aspherical lens system" 30 is positioned near the object and below the objective lens system 18. The additional lens system 30 presents a magnified and inverted image of the object 20. The object 20 is shown as being an eye undergoing microsurgery. A non-magnifying conformer lens 21 (primary contact element) is used in contact with the eye's cornea to cause the cornea, by slight pressure, to have a uniform shape, namely the shape of that face of lens 21 which is in contact with the cornea. Conformer lens 21 acts on the positioning means to position the eye which is to be viewed. As shown in Figure 6, the aspherical lens 30 and the conformer lens 21 may be contained in a common housing 25 when used in eye surgery.

The inverter 14 (inverter prism system) consists of two prism systems 50 and 70. The prism system 50 takes the left image and inverts it and transmits it to the right eyepiece. The prism system 70 takes the right image, inverts it and transmits it to the left eyepiece.

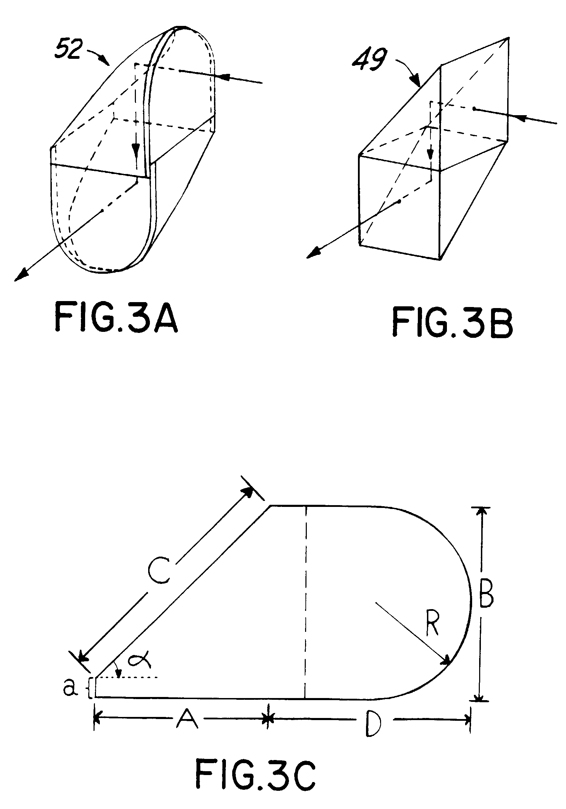

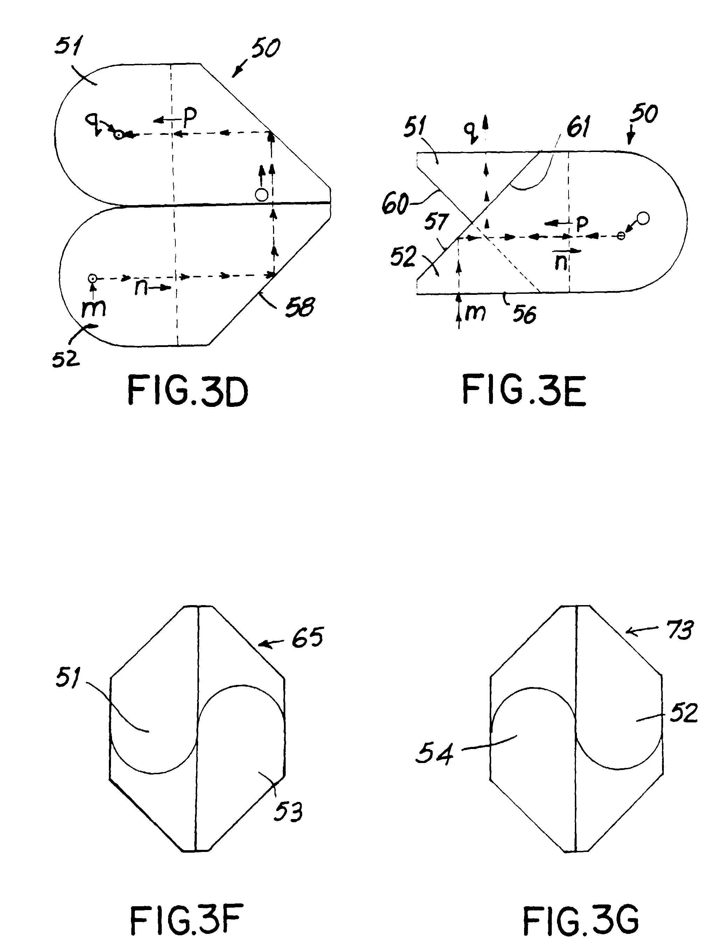

For simplicity of explanation Figs. 3D and 3E show a single pair of prisms forming prism system 50. The prism system 50 inverts the image. Since the additional lens system 30 has inverted the image, relative to the object, the prism system 50 inverts the image again to present a non-inverted image to the eyepiece lens of the microscope. The prism system 50 is called "Abbe's Modification of the Porro Prism System" ("Abbe-Modification"). The basic Porro prism system consists of two right-angle prisms identical in construction and placed at right angles to each other. The Abbe-Modification prism system 50 consists of two prisms 51 and 52 which are identical. Each of the four prisms 51-54 forming the prism cluster of inverter 14 are exactly the same, in size, shape and optical properties. The prisms 51-54 may all be left prisms or may all be right prisms. As seen in Figures 3D and 3E, the optical image beam m enters from the bottom face 56 of prism 52 and is reflected from a 45° angles face 57 to become beam n, which is reflected from a 45° angle face 58 (Fig. 3D) to exit, as beam o, from the side of the prism 52.

That beam o enters the second prism 51 of the pair and is again internally reflected twice and exits the top of prism 51. The entry and exit beams, to the prism pair, are parallel but not aligned.

The following is a chart of relative dimensions for each of the prisms 51-54: A = 1.00 (length of face 58); n = 1.517; α = 45°; a = 0.10 (chosen arbitrary); B = A+a = 1.10; C = 1.4142 X A = 1.4142; D = A + 2a = 1.20; R = B/2 = 0.55; Δ = B = 1.10; d = 2 (2A + 3a) = 4.60; and d/n = 3.0323.

Preferably each of the prisms 51-54 have the following dimensions: B = 21 mm = Δ ; R = 10.5 mm; a = 2 mm; A = 19 mm; α = 45°C; C = 26.869 mm; n = 28.823; D = 23 mm; d = 88 mm; and d/n = 3.053.

The prisms 51 and 53 are cemented together to form top layer 65 and the prisms 52 and 54 are cemented together to form bottom layer 73, as shown in Figures 3F and 3G.

The faces of prism 52 are shown in Figures 3A-3D. Each of the other three prisms are identical. The face 58 having dimensions C and 2R is one of the two reflective 45° faces of the prism. Preferably, but not necessarily, faces 60,61 (the entry and exit faces) are reflective (silvered).

The additional aspherical lens system comprised of two lens are shown in Figure 4A. It consists of a top convex-concave lens 80 and a bottom concave-convex lens 81. The bottom lens 81 has a flatter aspherical curve, preferably by about 30%, than the top lens 80. The edges of the two lenses may be cemented together to form an air gap 82 or the two lenses may be mounted in an air tight tube. The outer face 84 of lens 80 is aspherical and the outer face 85 of lens 81 is also aspherical. In addition, if desired, the inner faces of those lenses may also be formed with aspherical shapes. The aspherical lens system is preferably small to facilitate the surgeon's manipulation of instruments around the cornea. That lens system preferably is light in weight and has a wide field of view.

In operation, the bottom lens 81 collects the image, for example from the periphery of the inner surface (retina area) of the eyeball during an eye operation. That image is reduced in size. The top lens 80 magnifies the reduced image and forms it in air, for example 10mm-15mm, above the lens surface 84.

However, the magnified image is inverted (left to right and right to left) relative to the object.

An aspherical lens 86 ("aspherical lens system") made of a single solid lens is shown in Figure 4B. Aspherical lens 86 has two oppositely facing convex surfaces that have aspherical shapes. The solid aspherical lens 86 functions similarly to the dual lens system. The bottom surface 88 collects the image from a wide field of view, such as the entire periphery of the inside of the eyeball, as well as the retina at the back of the eyeball. The top surface 87 magnifies the image produced by the bottom surface 88. The magnified image produced by the solid aspherical lens 86 is inverted relative to the object.

The use of either the single or dual aspherical lens system produces an image of great depth and a wide field of view. In eye surgery, the interior view of the eyeball is greatly expanded to show a full peripheral view of the sides of the eyeball as well as the back of the eyeball. The image produced also has a three-dimensional appearance that allows the surgeon to operate more accurately.

In Figure 1 the inverter 14 is shown positioned above the zoom 15 (zoom optics). This has the advantages of relatively simpler engineering, relatively better access and less expense. It is out of the way of the surgeon and there is no need for a second objective lens. The disadvantages are that it requires a longer housing and requires, proximate the inverter, built-in filters 23 for protecting the user's eyes from diode laser beams.

Alternatively, and not shown, the inverter 14 may be located below the zoom lenses 15. This provides a shorter body length and does not interfere with the laser shutter. However, it may require a compensating objective lens so that, when the inverter is used, the focal point will be matched to the image (in air) of the aspherical lens system 30. However, this arrangement has a shorter focal distance to the eye, which may interfere with some instruments.

The inverter 14 may be built into the housing 13. However, preferably, as shown in Figure 2 the four prisms of the inverter are held in a frame (housing) 90 having knob 91 with a threaded (screws) shaft 92 to adjust the position of the prism assembly within the frame 90. The frame 90 slides, on rails, to be inserted into the housing 13 and may be removed so that the microscope may be used, with its normal stereoscopic view, for other purposes. For example, the frame 90 may be retracted for external eye surgery when the additional aspherical lens system (wide angle contact lens system) is not used.

As shown in Figure 5, the eye 20 being operated upon has a cornea 100. The aspherical lens system 30 ("additional aspheric lens system") is proximate the cornea 100 and forms an image for the microscopic objective lens system 18. As shown in Figure 6, the aspheric lens and the conformer lens 21 may be contained in a common housing which is used to position the eyeball. The zoom lens system (zoom optics) 15 is positioned beneath the inverter 14 and a beam splitter 101 is positioned above the inverter 14. The beam splitter 101 provides a stereo image to the optical system (not shown) for the surgeon's assistant or a stereo video camera. The binocular tubes 102 and eye piece lenses 11 and 12 are positioned above the beam splitter 101.

Modifications may be made within the scope of the claims. For example, as shown in Figure 7, the aspherical lens system having two convex surfaces consists of three plastic convex-convex lenses 80,81,82 each of which is aspherical. Preferably the plastic lens 80-82 and the conformer lens 21 are of the optical plastic PMMA (polymethacrylic).

## Claims

1. A stereoscopic microscope system adapted for vitrectomy eye microsurgery comprising:
(a) positioning means (21) to position an eye (20) to be viewed;
(b) a lens system (30) located adjacent to the positioning means (21) and having two oppositely facing convex surfaces (84,85,87,88), the lens system producing a single inverted wide and magnified image;
(c) an image splitting means (18) for splitting said inverted image from the lens system (30) into separated left and right inverted images;
(d) a prism system means (14) to re-invert said separated left and right images from the image splitting means so as to produce left and right reverted images; and
(e) binocular tubes (102) and eyepiece means (11,12) for viewing said left and right reverted images;
characterised in that said lens system (30) is an aspherical lens system and in that said prism system means (14) consists of four prisms (51-54) being two pairs of prisms (50,70) each pair of prisms being Abbe's Modification of a Porro prism system, each of the four prisms (52-54) being the same size and shape, and the four prisms being cemented together to form top and bottom layers (65,73) of a unitary prism cluster.

2. The stereoscopic microscope system as in claim 1, characterised in that the image splitting means (18) that produces separate left and right inverted images is an objective lens system of the stereomicroscope.

3. The stereomicroscopic microscope system as in claim 2, characterised by a zoom lens magnification changer means (15) positioned between the objective lens system (18) and the prism system means (14), wherein the zoom lens magnification changer means (15) reduces or enlarges the separated left and right inverted images from the objective lens system (18).

4. The stereoscopic microscope system as in claim 2, characterised by a zoom lens magnification changer means (15) positioned adjacent the prism system means (14) wherein the zoom lens magnification changer means enlarges or reduces the separated left and right images reverted from the prism system.

5. The stereoscopic microscope system as in claim 2, characterised by a beam splitter means (101) positioned between the prism system means (14) and the binocular tubes (102) and eyepiece means (11,12) wherein the beam splitter means (101) splits the left and right reverted images from the prism system (14) into primary left and right reverted images which are sent to the binocular tubes (102) and eyepieces (11,12), and secondary left and right reverted images, which are sent to an auxiliary or secondary viewing port (19).

6. The stereoscopic microscope system as in claim 3, characterised by a beam splitter means (101) positioned between the zoom lens magnification change means (15) and the binocular tubes (102) and eyepiece means (11,12) wherein the beam splitter means (101) is used to split the left and right images from the zoom lens means (15) into primary left and right images and secondary left and right images.

7. The stereoscopic microscope system as in any preceding claim, characterised by filters (23) in the prism system (14) to provide protection from a laser beam.

8. The stereoscopic microscope system as in claim 1, characterised in that the aspherical lens system (30) comprises a single lens (86) having two oppositely facing convex surfaces (87,88) and the positioning means (21) comprises a convex-concave eyeball conformer lens.

9. The stereoscopic microscope system as in claim 1, characterised in that the aspherical lens system (30) comprises a first lens (81) proximate the positioning means (21) and having convex-concave curved surfaces and a second lens (80) facing the first lens and having concave-convex surfaces, with the concave surfaces of the first and second lenses facing each other.

## Patentansprüche

1. Stereomikroskopsystem, das ausgelegt ist für Mikrochirurgie am Glaskörper des Auges und folgendes umfaßt:
(a) ein Positioniermittel (21) zum Positionieren eines zu betrachtenden Auges (20);
(b) ein Linsensystem (30), das neben dem Positioniermittel (21) angeordnet ist und zwei entgegengesetzt gewandte konvexe Flächen (84, 85, 87, 88) aufweist, wobei das Linsensystem ein einzelnes, kopfstehendes, breites und vergrößertes Bild erzeugt;
(c) ein Bildteilmittel (18) zum Teilen des kopfstehenden Bildes von dem Linsensystem (30) in ein getrenntes linkes und rechtes kopfstehendes Bild;
(d) ein Prismensystemmittel (14) zum Wiederaufrichten des getrennten linken und rechten Bildes von dem Bildteilmittel, um hinsichtlich links und rechts seitenvertauschte Bilder zu erzeugen; und
(e) Binokulartuben (102) und Okularmittel (11, 12) zum Betrachten der hinsichtlich links und rechts seitenvertauschten Bilder;
dadurch gekennzeichnet, daß das Linsensystem (30) ein asphärisches Linsensystem ist und daß das Prismensystemmittel (14) aus vier Prismen (51 - 54), die zwei Prismenpaare (50, 70) sind, besteht, wobei jedes Prismenpaar eine Abbesche Modifikation eines Porro-Prismensystems ist, wobei jedes der vier Prismen (52 - 54) die gleiche Größe und Form aufweist und die vier Prismen zusammengekittet sind, um die obere und untere Lage (65, 73) einer unitären Prismengruppe zu bilden.

2. Stereomikroskopsystem nach Anspruch 1, dadurch gekennzeichnet, daß das Bildteilmittel (18), das ein getrenntes linkes und rechtes kopfstehendes Bild erzeugt, ein Objektivsystem des Stereomikroskops ist.

3. Stereomikroskopsystem nach Anspruch 2, gekennzeichnet durch ein zwischen dem Objektivsystem (18) und dem Prismensystemmittel (14) angeordnetes Zoomobjektivvergrößerungswechslermittel (15), wobei das Zoomobjektivvergrößerungswechslermittel (15) das getrennte linke und rechte kopfstehende Bild von dem Objektivsystem (18) verkleinert oder vergrößert.

4. Stereomikroskopsystem nach Anspruch 2, gekennzeichnet durch ein neben dem Prismensystemmittel (14) angeordnetes Zoomobjektivvergrößerungswechslermittel (15), wobei das Zoomobjektivvergrößerungswechslermittel (15) die getrennten, von dem Prismensystem hinsichtlich links und rechts seitenvertauschten Bilder vergrößert oder verkleinert.

5. Stereomikroskopsystem nach Anspruch 2, gekennzeichnet durch ein zwischen dem Prismensystemmittel (14) und den Binokulartuben (102) und Okularmitteln (11, 12) angeordnetes Strahlteilermittel (101), wobei das Strahlteilermittel (101) die von dem Prismensystem (14) hinsichtlich links und rechts seitenvertauschten Bilder in primäre hinsichtlich links und rechts seitenvertauschte Bilder, die zu den Binokulartuben (102) und Okularen (11, 12) weitergeleitet werden, und hinsichtlich links und rechts seitenvertauschte Nebenbilder, die zu einer Hilfs- oder Nebenbeobachtungsöffnung (19) weitergeleitet werden, aufteilt.

6. Stereomikroskopsystem nach Anspruch 3, gekennzeichnet durch ein zwischen dem Zoomobjektivvergrößerungswechslermittel (15) und den Binokulartuben (102) und Okularmitteln (11, 12) angeordnetes Strahlteilermittel (101), wobei mit dem Strahlteilermittel (101) das rechte und linke Bild von dem Zoomobjektivmittel (15) in ein linkes und rechtes primäres Bild und ein linkes und rechtes Nebenbild aufgeteilt werden.

7. Stereomikroskopsystem nach einem der vorhergehenden Ansprüche, gekennzeichnet durch Filter (23) in dem Prismensystem (14), um für Schutz vor einem Laserstrahl zu sorgen.

8. Stereomikroskopsystem nach Anspruch 1, dadurch gekennzeichnet, daß das asphärische Linsensystem (30) aus einer einzigen Linse (86) mit zwei entgegengesetzt gerichteten konvexen Flächen (87, 88) besteht und das Positioniermittel (21) aus einer konvexkonkave Augenapfelanpassungslinse besteht.

9. Stereomikroskopsystem nach Anspruch 1, dadurch gekennzeichnet, daß das asphärische Linsensystem (30) aus einer in der Nähe des Positioniermittels (21) angeordneten ersten Linse (81) mit konvexkonkav gekrümmten Flächen und einer der ersten Linse zugewandten zweiten Linse (80) mit konkavkonvexen Flächen besteht, wobei die konkaven Flächen der ersten und zweiten Linse einander zugewandt sind.

## Revendications

1. Système de microscope stéréoscopique adapté pour la vitrectomie en microchirurgie de l'oeil, comprenant:
(a) un moyen de positionnement (21) pour positionner un oeil (20) à examiner;
(b) un système de lentille (30) adjacent au moyen de positionnement (21) et ayant deux surfaces convexes opposées l'une à l'autre (84, 85, 87, 88), le système de lentille produisant une image unique inversée large et grossie;
(c) un moyen diviseur d'image (18) pour diviser ladite image inversée provenant du système de lentille (30) en images inversées séparées gauche et droite;
(d) un moyen de système de prismes (14) pour ré-inverser lesdites images séparées gauche et droite provenant du moyen diviseur d'image de manière à produire des images remises à l'endroit gauche et droite; et
(e) un moyen de tubes binoculaires (102) et d'oculaires (11, 12) pour examiner lesdites images remises à l'endroit gauche et droite;
caractérisé en ce que ledit système de lentille (30) est un système de lentille asphérique et en ce que ledit moyen de système de prismes (14) se compose de quatre prismes (51-54) sous forme de deux paires de prismes (50, 70), chaque paire de prismes étant une modification de Abbe d'un système de prismes de Porro, chacun des quatres prismes (52-54) ayant la même dimension et la même forme, et les quatre prismes étant cimentés ensemble pour former des couches supérieure et inférieure (65, 73) d'un groupement de prismes unitaire.

2. Système de microscope stéréoscopique selon la revendication 1, caractérisé en ce que le moyen diviseur d'image (18) qui produit des images gauche et droite inversées séparées est un système de lentille d'objectif du stéréomicroscope.

3. Système de microscope stéréoscopique selon la revendication 2, caractérisé par un moyen (15) de modification du grossissement du zoom, positionné entre le système de lentille d'objectif (18) et le moyen de système de prismes (14), dans lequel le moyen (15) de modification du grossissement du zoom réduit ou agrandit les images gauche et droite séparées inversées provenant du système de lentille d'objectif (18).

4. Système de microscope stéréoscopique selon la revendication 2, caractérisé par un moyen (15) de modification du grossissement du zoom adjacent au moyen de système de prismes (14), dans lequel le moyen de modification du grossissement du zoom agrandit ou réduit les images gauche et droite séparées remises à l'endroit provenant du système de prismes.

5. Système de microscope stéréoscopique selon la revendication 2, caractérisé par un moyen diviseur de faisceau (101) positionné entre le moyen de système de prismes (14) et le moyen de tubes binoculaires (102) et d'oculaires (11, 12), dans lequel le moyen diviseur de faisceau (101) divise les images gauche et droite remises à l'endroit provenant du système de prismes (14) en images primaires gauche et droite remises à l'endroit qui sont envoyées aux tubes binoculaires (102) et aux oculaires (11, 12) et en images secondaires gauche et droite remises à l'endroit, qui sont envoyées à un poste d'examen auxiliaire ou secondaire (19).

6. Système de microscope stéréoscopique selon la revendication 3, caractérisé par un moyen diviseur de faisceau (101) positionné entre le moyen (15) de modification du grossissement du zoom et le moyen de tubes binoculaires (102) et d'oculaires (11, 12), dans lequel le moyen diviseur de faisceau (101) est utilisé pour diviser les images gauche et droite provenant du moyen de zoom (15) en images primaires gauche et droite et en images secondaires gauche et droite.

7. Système de microscope stéréoscopique selon l'une quelconque des revendications précédentes, caractérisé par des filtres (23) dans le système de prismes (14) pour fournir une protection contre un faisceau laser.

8. Système de microscope stéréoscopique selon la revendication 1, caractérisé en ce que le système de lentille asphérique (30) comprend une lentille unique (86) ayant deux surfaces convexes opposées l'une à l'autre (87, 88) et le moyen de positionnement (21) comprend une lentille convexe-concave épousant la forme du globe oculaire.

9. Système de microscope stéréoscopique selon la revendication 1, caractérisé en ce que le système de lentille asphérique (30) comprend une première lentille (81) à proximité du moyen de positionnement (21) et ayant des surfaces courbes convexe-concave, et une deuxième lentille (80) en face de la première lentille et ayant des surfaces concave-convexe, les surfaces concaves des première et deuxième lentilles se faisant face.
